Europäisches Patentamt

(19) European Patent Office

Office européen des brevets

(11) **EP 0 763 925 B1**

(12) **EUROPEAN PATENT SPECIFICATION**

(45) Date of publication and mention
of the grant of the patent:
**15.03.2000 Bulletin 2000/11**

(51) Int Cl.⁷: **H04N 1/41**, H04N 7/30,
G06T 9/00

(21) Application number: **96203076.3**

(22) Date of filing: **27.12.1991**

(54) **Image encoding optimising the amount of generated code**

Bildcodierung mit Optimierung der erzeugten Codemenge

Codage d'images optimisant la quantité du code généré

(84) Designated Contracting States:
**DE ES FR GB IT NL**

(30) Priority: **28.12.1990 JP 40894790**
**15.04.1991 JP 8240191**
**15.04.1991 JP 8240291**
**17.04.1991 JP 8538691**

(43) Date of publication of application:
**19.03.1997 Bulletin 1997/12**

(62) Document number(s) of the earlier application(s) in
accordance with Art. 76 EPC:
**91312057.2 / 0 493 130**

(73) Proprietor: **CANON KABUSHIKI KAISHA**
**Tokyo (JP)**

(72) Inventors:
• **Enari, Masahiko**
**Ohta-ku, Tokyo (JP)**
• **Hoshi, Nobuhiro**
**Ohta-ku, Tokyo (JP)**
• **Takizawa, Hiroshi**
**Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 267 579**       **EP-A- 0 380 081**
**EP-A- 0 401 854**       **EP-A- 0 447 247**
**EP-A- 0 469 835**       **EP-A- 0 469 852**
**US-A- 4 922 273**

• **PATENT ABSTRACTS OF JAPAN vol. 014, no.
444 (E-0982), 21 September 1990 & JP 02 174482
A (NIPPON TELEGR & TELEPH CORP ;OTHERS:
01), 5 July 1990**
• **PATENT ABSTRACTS OF JAPAN vol. 14, no. 573
(E-1015), 19 December 1990 & JP 02 248180 A
(TOSHIBA CORP), 3 October 1990**
• **MUKANA ET AL: 'An Interframe Coding System
for Video Teleconferencing Signal Transmission
at a 1.5 Mbit/s Rate' IEEE TRANSACTIONS vol.
COM-32, no. 3, 03 March 1984, pages 280 - 287**

**Description**

The present invention relates to an image processing apparatus, and, more particularly to an image processing apparatus for compressing a digital image and transmitting compressed data to a transmission path or a storage medium.

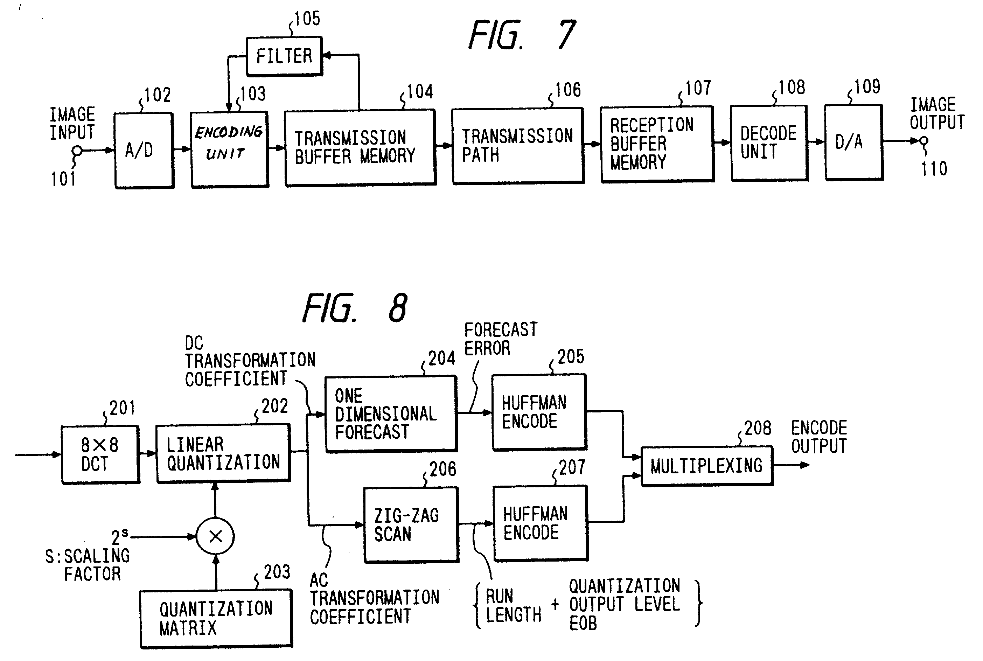

Fig. 7 illustrates a conventional image encoding apparatus in which image data received at a terminal 101 is analog-to-digital (hereinafter abbreviated to "A/D") converted in an A/D converter 102 before it is formed into a variable-length compressed code in an encoding unit 103. Then the variable-length compressed code is temporarily stored in a transmission buffer memory 104 before it is transmitted to a transmission path 106. At this time, a control coefficient (parameter) for use to control the quantity of data of the variable-length compressed code generated in the encoding unit 103 is generated depending upon the degree of the data occupancy of a buffer memory 104 and the transmission rate of the transmission path 106 so as to be fed back to the encoding unit 103 via a filter 105. As a result compressed data representing an image can, in an averaged manner, be transmitted at a rate of the transmission path 106. Data received via the transmission path 106 is temporarily stored in a receiving buffer memory 107 so as to, together with the supplied control coefficient, be transmitted to a decoding unit 108. As a result, variable-length compressed encoded data is expanded and decoded before it is digital-to-analog converted in a D/A converter 109 so that an image is transmitted through to a terminal 110.

A variety of systems for compressing a colour image to be performed in the encoding unit 103 shown in Fig. 7 have been disclosed. Among others a so-called Adaptive Discrete Cosine Transform (ADCT) system has been suggested as a preferable colour image encoding system.

Fig. 8 is a schematic structural view which illustrates an image encoding apparatus structured to act according to the above-described ADCT system. The above-described apparatus is arranged to receive an image represented by 8 bit, that is, data converted into 256 gradations/colour by the A/D data converter 102 shown in Fig. 7, the input image being composed of three or four colours, that is, RGB, YUV, YPbPr, L*a*b* or YMCK or the like. The input image is, by a DCT unit 201, immediately subjected to a two-dimensional discrete cosine transformation (hereinafter abbreviated by "DCT") in units of sub-blocks each of which is composed of 8 x 8 pixels. Then, the obtained conversion coefficients are linearly quantized in a linear quantizing unit 202. Each conversion coefficient has a different quantizing step size which is made to be a value obtained by multiplying by K an element of an 8 x 8 quantization matrix the 8 x 8 quantization matrix being employed while taking into consideration for each conversion coefficient the difference of the visual sensitivity for sensing the quantization noise, where K is called a "control coefficient". The value of K is used to control the image quality and the quantity of compressed and generated data. Table 1 shows an example of a quantization matrix stored in a quantization matrix storage unit 203. That is, since the number of quantization steps is reduced when K is enlarged, the image quality deteriorates and the data quantity decreases.

| 16 | 11 | 10 | 16 | 24 | 40 | 51 | 61 |
|----|----|----|----|-----|-----|-----|-----|
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 109 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

After the quantization has been completed, a DC conversion component (hereinafter called a "DC component") is, in a one-dimensional prediction unit 204, subjected to a one-dimensional forecasting between adjacent sub-blocks. As a result, the forecasted error is Huffman-encoded in a Huffman encoding unit 205.

Then, the quantization output denoting the forecast error is divided into groups so that the identification number of a group which includes the forecast error is Huffman-encoded before the value of the quantization output in the group is expressed by a fixed length code.

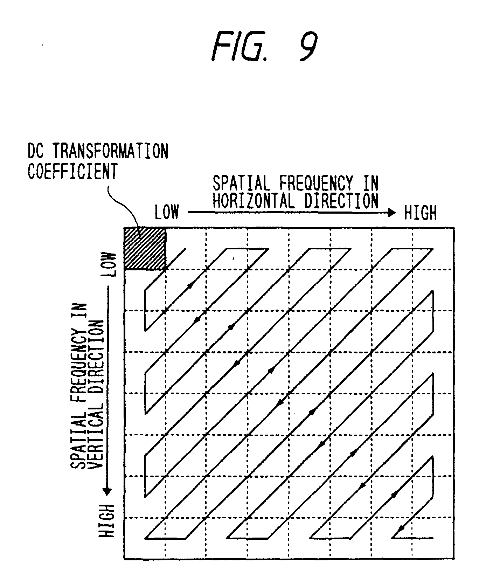

The AC conversion component (hereinafter called "AC component") is encoded using a zigzag scanning unit 206 in such a manner that the above-described quantization output is diagonally zigzag scanned in a direction from low spatial frequency to high spatial frequency as shown in Fig. 9.

That is, significant conversion coefficients, i.e. coefficients of non-zero value, are identified by an identification number according to horizonal and vertical spatial frequency. Also, the number of insignificant conversion coefficients, i.e. coefficients of zero value, scanned between each respective significant conversion coefficient and the next following scanned significant conversion coefficient is extracted. Each respective identification number and the corresponding extracted number of insignificant coefficients are paired and are Huffman encoded by the Huffman encoding unit 207.

The respective values of the quantization output, ie the significant conversion coefficients, are each expressed by a fixed length code.

Since the number of significant conversion coefficients is dependent on spatial frequency distribution, and will thus vary from one image frame to the next, the length of code generated for each image frame also will vary. It is thus difficult to match the capacity of the buffer memory 107, shown in Fig.7, to the amount of encoded data generated. If the capacity is too small, overflow will occur and the reproduced image will be degraded. If a large size memory is chosen to avoid such overflow, then there are penalties in extra hardware size and cost.

The above problem of avoiding overflow has been addressed by Mukana et al., IEEE Transactions on Communications, Vol. Com -32, No. 3 March 1984, pages 280-287, and in EP-A-0 267 579. In the case of transmitting or recording still image data, if the quantization is not controlled adaptively it is neither possible to predict the time required for transmission nor possible to predict the storage capacity required for recording.

A variety of code length control techniques have been disclosed in European Patent Publications EP-A-0447247 published 18 September 1991, EP-A-0469835, EP-A-0469852, both published 5 February 1992. EP-A-0469835 discloses iteratively controlling the quantization characteristic to keep the amount of code below a desired value. Moreover, plural encoders are arranged in parallel, using respectively different encoding control parameters. The output from the encoder whose amount of code is an optimum approximation of the desired amount is selected. Further techniques are disclosed in US-A-4922273 and EP-A-0401854.

The present invention, as defined in the appended claims, is intended as a solution to the problems discussed above.

In the accompanying drawings

Fig. 1 is a structure block diagram which illustrates a first exemplary embodiment of a code length contolling apparatus;
Fig. 2 illustrates an image to be transmitted in a structure according to the first embodiment;
Fig. 3 illustrates a calculating method according to the first embodiment;
Fig. 4 is a structure view which illustrates a second exemplary embodiment of a code length controlling apparatus;
Fig. 5 illustrates a calculating method according to the second embodiment;
Fig. 6 illustrates a calculation flow according to the second embodiment;
Fig. 7 is a structural block diagram according to a conventional example;
Fig. 8 illustrates an ordinary variable-length encoding system;
Fig. 9, in detail, illustrates the ordinary variable-length encoding system;
Fig. 10 illustrates a relationship between control coefficients and information quantities, according to a third exemplary embodiment of a code length controlling apparatus;
Fig. 11 illustrates another relationship between control coefficients and information quantities, according to the third embodiment;
Fig. 12 illustrates a further-detailed calculating method according to a fourth exemplary embodiment of a code length controlling apparatus;
Fig. 13 illustrates a calculating flow according to the fourth embodiment;
Fig. 14 illustrates a further-detailed calculating method according to a fifth exemplary embodiment of a code length controlling apparatus;
Fig. 15 illustrates a calculating flow according to the fifth embodiment;
Fig. 16 is a block diagram which illustrates a sixth embodiment of an image encoding apparatus that represents the present invention;
Fig. 17 is a block diagram which illustrates the schematic structure of a conventional encoding system which employs a DCT conversion;
Fig. 18 illustrates a quantization process shown in Fig. 17;
Fig. 19 illustrates a quantization process shown in Fig. 17;
Fig. 20 illustrates the sixth embodiment;
Fig. 21 further illustrates the sixth embodiment; and
Fig. 22 further illustrates the sixth embodiment shown in Fig. 16.

First exemplary Embodiment

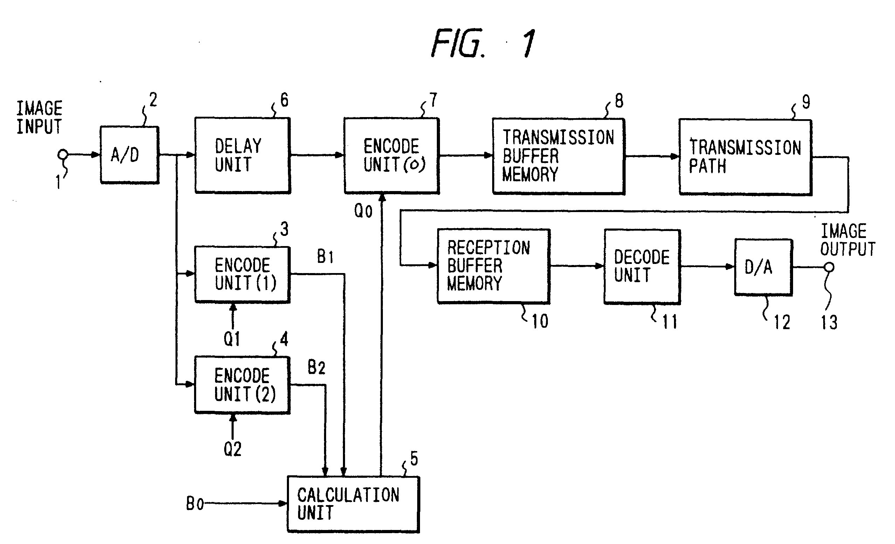

A first exemplary embodiment of an image encoding apparatus will be described now with reference to the drawings. Fig. 1 is a structural block diagram which illustrates an image processing apparatus. An image received from a video camera or a host computer or an image scanner or the like is A/D converted by an A/D converter 2 before it is variable-length encoded by an encoding unit (1) given reference numeral 3 by the above-described so-called ADCT system. At this time the control coefficient K has a constant value $Q_1$ for the current one frame of the image. As a result, the compressed information quantity $B_1$ is measured and the measured quantity $B_1$ is transmitted to a calculating unit 5.

Simultaneously, the image data is also variable-length encoded by an encoding unit (2) given reference numeral 4 by the so-called ADCT system. At this time control coefficient K has a different constant value $Q_2$, for the current one frame of the image. The resulting, compressed information quantity $B_2$ is measured and also transmitted to the calculating unit 5. Reference numeral 6 represents an image data delay unit for delaying the image, which has been A/D-converted, by about one image frame.

Reference numeral 7 represents an encoding unit (0) for compressing and encoding the delayed image data under control of an optimum control coefficient $K=Q_0$ which is calculated by a linear approximation from $Q_1$, $Q_2$, the measured amounts $B_1$ and $B_2$ in the calculating unit 5, and from the predetermined desired quantity value $B_0$ of compressed and encoded data which value is already stored in a memory such as a ROM, a RAM and the like so as to be transmitted to the calculating unit 5.

Reference numeral 9 represents a transmission path comprising a transmission medium such as ground waves or an optical space or the like exemplified by an optical fibre, a satellite or microwaves in the case of instantaneous transmission. In case of accumulated transmission, it is a storage medium such as a tape type medium exemplified by a digital VTR or a DAT or the like, a disc-like medium such as a floppy disk or an optical disk or the like or a solid medium such as a semiconductor memory.

The transmission rate is determined depending upon the quantity of information of the original image, the compression rate and a required transmission time such that it is varied from several tens of kbits/second to several tens of Mbits/second.

On the other hand, data received through the transmission path 9 is temporarily stored in a receiving buffer memory 10 so that compressed encoded data read from the receiving buffer memory 10 is extended and decoded in the decoding unit 11 with the optimum control coefficient $Q_0$ which has been received simultaneously with the above-described data item. Then, it is digital-to-analog converted a D/A converting unit so that an image is transmitted to a terminal 13.

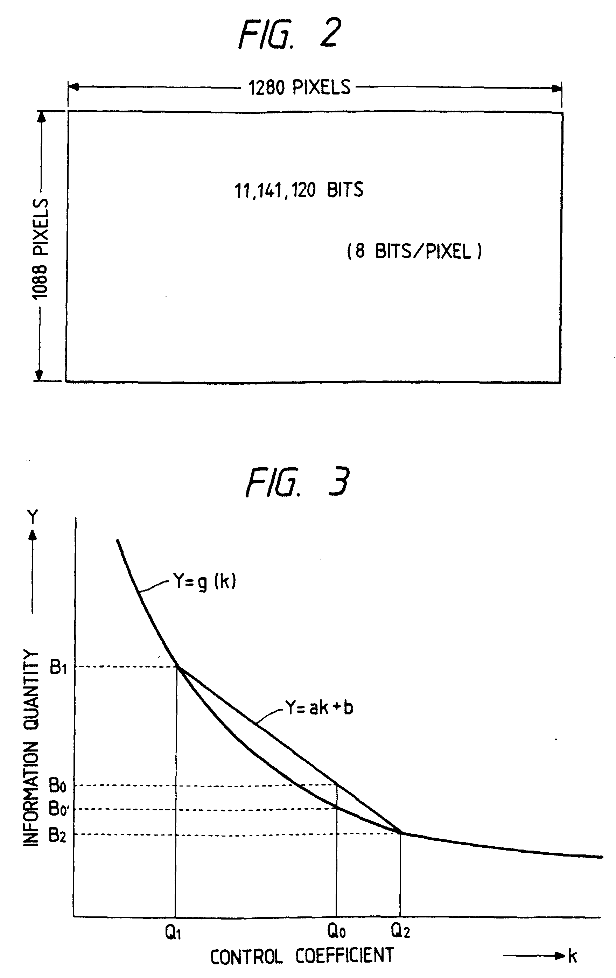

Referring to Figs. 2 and 3, the present invention will now be described in detail. Fig. 2 illustrates an example of an image to be transmitted, one frame of the image being an A/D converted image composed of 1280 pixels, each of which is constituted by 8 bits, in the horizontal direction and 1088 pixels in the longitudinal direction. The data capacity of one image is made of 1,280 x 1,088 x 8 = 11,141,120 bits. If the image is transmitted as a moving image at a speed of 30 frames/second a high speed transmission path capable of realizing 11,141,120 x 30 = 334,233,600 bits/second must be used.

On the other hand, the transmission path is usually arranged to act at a predetermined transmission rate. Therefore, an information quantity which exceeds the predetermined transmission rate will cause a data overload to occur and thereby the transmission cannot be made. Assuming that a transmission path, the transmission rate of which is 36.0000 Mbits/second, is used and as well assuming that the redundancy degree for information such as a sink code, an ID code and a parity is 5%, the transmission rate at which image information can be transmitted is 34.2000 Mbits/second and thereby the compressed information quantity for one image (one frame) is 1.1400 Mbits/frame. Therefore, the image of one frame must be compressed to a degree which is 10.23% or less. Furthermore, dummy data amounting to the residual quantity: 1,140,000 - (11,141,120 x 0.1023) = 263.424 bits/frame, that is, 263.424 x 30 = 7,902.72 bits/second must be inserted.

Assuming that the control coefficient is a certain value and thereby the compressed information quantity of a certain image is 10%, the capacity of image information is 334,233,600 x 0.1 = 33,423,360 bits/seconds and thereby dummy data of 34,200,000 - (334,233,600 x 0.1) = 776,640 bits/second must be inserted.

Assuming that the control coefficient has a certain value and thereby the compressed information quantity of a certain image is 11%, the capacity of image information is 334,233,600 x 0.11 = 36,765,696 bits/seconds, resulting in a negative amount of dummy data of 34,200,000 - (344,233,600 x 0.1)= -2,565,696 bits/second, which corresponds to exceeding the transmission rate of the transmission path, causing a data overload to occur.

Therefore, it is necessary to constitute a structure in such a manner that the target compression rate set to 10.23% and an optimum control coefficient $Q_0$ is given to the encoding unit (0) given reference numeral 7 shown in Fig. 1 in order to obtain an approximate value which does not exceed the target compression rate of 10.23%.

Fig. 3 illustrates a process of determining an optimum control coefficient $Q_0$, wherein a case in which the information quantity is compressed and encoded to about 1/10 by the so-called ADCT system is illustrated.

The encoding system is arranged to be similar to that shown in Fig. 8 such that 8 horizontal pixels x 8 longitudinal pixels are collected into a DCT sub-block and the DCT conversion is performed in units of the DCT sub-blocks before the conversion coefficient is linearly quantized. Each conversion coefficient has a different quantizing step size which is made to be a value obtained by multiplying an 8 x 8 quantization matrix element shown in Table 1 by K, the 8 x 8 quantization matrix being employed while taking into consideration for each conversion coefficient the difference of the visual sensitivity for sensing the quantization noise . The value of K is used to control the image quality and the quantity of generated data so that the above-described desired compression ratio of about 1/10 is realized. After the quantization has been completed, a DC conversion component is, as a subtraction value from zero, subjected to a one-dimensional forecasting between adjacent sub-blocks. Then, the forecast error is Huffman-encoded. Then, the quantization output denoting the forecast error is divided into groups so that the identification number of a group which includes the forecasted error is Huffman-encoded before the value of the quantization output in the group is expressed by a fixed length code. An AC conversion component excluding the DC component is encoded in such a manner that the above-described quantization output is zigzag scanned from the low frequency component to the high frequency component. That is, the significant coefficients are classified into groups depending upon their values, and the identification number of the group and the number of the insignificant coefficients held between each significant coefficient and a following significant coefficient positioned in front of it in the direction of the scan, are paired with the significant coefficient and then Huffman encoded. At this time, two control coefficients $Q_1$ and $Q_2$ are selected and relationships $Q_1 < Q_0$ and $Q_0 < Q_2$ are established.

Fig. 3 illustrates the relationship between control coefficient K for an ordinary image frame and the compressed information quantity Y. The above-described relationship between Y and K is expressed by function g, that is, Y = g (K), where function g is considered such that it extremely approximates a log curve expressed by:

$$Y = g\ (K) = p \log K + q$$

$$\text{(where p and q are constants)} \tag{1}$$

Then, encoding using control coefficient $Q_1$ is performed in the encoding unit (1) given reference numeral 3 shown in Fig. 1 so that compressed information quantity $B_1$ is obtained.

Furthermore, encoding using control coefficient $Q_2$ is performed in the encoding unit (2) given reference numeral 4 shown in Fig. 1 so that compressed information quantity $B_2$ is obtained.

In the calculating unit 5 shown in Fig. 1, a straight Y = aK + b (wherein a and b are constants) which connects two points $(Q_1, B_1)$ and $(Q_2, B_2)$ is calculated.

$$Y = \frac{B_1 - B_2}{Q_1 - Q_2} \cdot K + \frac{Q_2 \cdot B_1}{Q_2 - Q_1} - \frac{Q_1 \cdot B_2}{Q_2 - Q_1} \tag{2}$$

Transformation is performed so that the following equation is obtained:

$$K = \frac{(Q_2 - Q_1) \cdot Y - Q_2 \cdot B_1 + Q_1 \cdot B_2}{B_2 - B_1} \tag{3}$$

Then, by setting $B_0$ shown in Fig. 3 to the compressed information quantity corresponding to the desired compression ratio (10.23%), the optimum control coefficient $Q_0$ can be obtained by substituting $B_0$ into Y in Equation (2).

$$Q_0 = \frac{(Q_2 - Q_1)\ B_0 - Q_2 \cdot B_1 + Q_1 \cdot B_2}{B_2 - B_1} \tag{4}$$

Actually, since the compressed information quantity generated with optimum control coefficient K = $Q_0$ has a value given by Y = g (K), the actual quantity is $B_0'$. Since equation (1) is a downward-convex log curve, the straight line, which connects two points on the downward-convex curve, necessarily is positioned on or above this curve as shown in Fig. 3. This means that: $B_0 > B_0'$ so that the desired compression ratio is not exceeded in any case. Therefore, data overload is avoided.

$Q_1$, $Q_2$ and $B_0$ of Equation (4) are known constant values. Therefore it is necessary to be capable of obtaining $B_1$ and $B_2$ by a trial of encoding. Therefore, the encoding units (1) and (2) respectively given reference numerals 3 and 4 shown in Fig. 1 are only required to generate the compressed information quantities.

Although the calculating unit 5 shown in Fig. 1 calculates the above-described Equation (4), the calculation may be performed by using a CPU or a look-up table which uses a ROM or a RAM or the like.

Although the above-described embodiment is arranged in such a manner that the relationship between the control coefficients and the compressed information quantities are expressed by a log curve, the actual relationship is sometimes different from this such that it can sometimes be approximated by a quadratic curve or a cubic curve depending upon the way of the quantization and the type of encoding employed in the encoding unit. However, any of the cases are commonly characterized in that each curve is a downward-convex curve (the tangent is always present below the curve). Therefore, the above-described method of determining the control coefficient can be effectively employed because of the above-described characteristics.

Second exemplary Embodiment

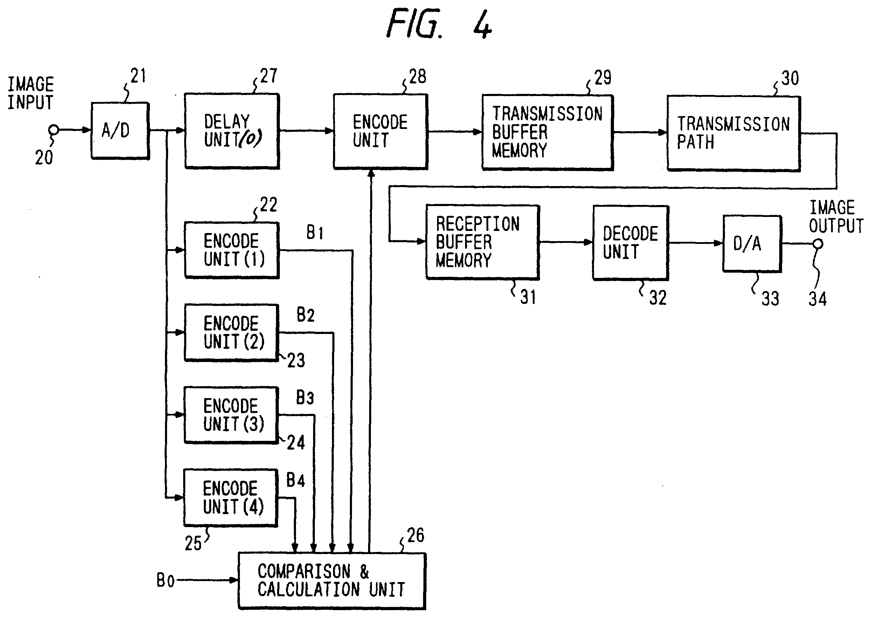

Fig. 4 is a structural block diagram which illustrates a second embodiment of an image encoding apparatus. An image received through a terminal 20 is A/D converted by an A/D converter 21 before it is variable-length encoded by an encoding unit (1) given reference numeral 22 by the above-described so-called ADCT system. At this time, control coefficient K is, as $Q_1$ which is a constant value, used to compress one frame of the image. As a result, a compressed information quantity $B_1$ is obtained so as to be transmitted to a comparison and calculating unit 26. Simultaneously, the image is also variable-length encoded by an encoding unit (2) given reference numeral 23 by the so-called ADCT system. At this time, control coefficient K is, as $Q_2$, which is a constant value, used to compress the one frame of the image. As a result, a compressed information quantity $B_2$ is obtained so as to be transmitted to the comparison and calculating unit 26. The same image is similarly variable-length encoded by an encoding unit (3) given reference numeral 24 by the so-called ADCT system. At this time, control coefficient K is, as $Q_3$, which is a constant value, used to compress the one frame of the image. As a result, a compressed information quantity $B_3$ is obtained so as to be transmitted to the comparison and calculating unit 26. Furthermore, the same image is similarly variable-length encoded by an encoding unit (4) given reference numeral 25 by the so-called ADCT system. At this time, control coefficient K is, as $Q_4$, which is a constant value, used to compress the one frame of the image. As a result, a compressed information quantity $B_4$ is obtained so as to be transmitted to the comparison and calculating unit 26.

Reference numeral 27 represents an image data delay unit for delaying the image, which has been A/D-converted, by about one image frame. Reference numeral 28 represents an encoding unit (0) for compressing and encoding the image data in dependance upon the optimum control coefficient $K = Q_0$ calculated by the comparison and calculating unit 26 so as to cause compressed and encoded data to be stored in a transmission buffer memory 29.

Reference numeral 30 represents a transmission path. Data received through the transmission path 30 is temporarily stored in a receiving buffer memory 31. Compressed and encoded data read from the receiving buffer memory 31 is, in the encoding and decoding unit 32, extended and decoded with optimum control coefficient $Q_0$ which has been received simultaneously. Then, it is digital-to-analog converted in the D/A converter 33 so that an image is transmitted from a terminal 34.

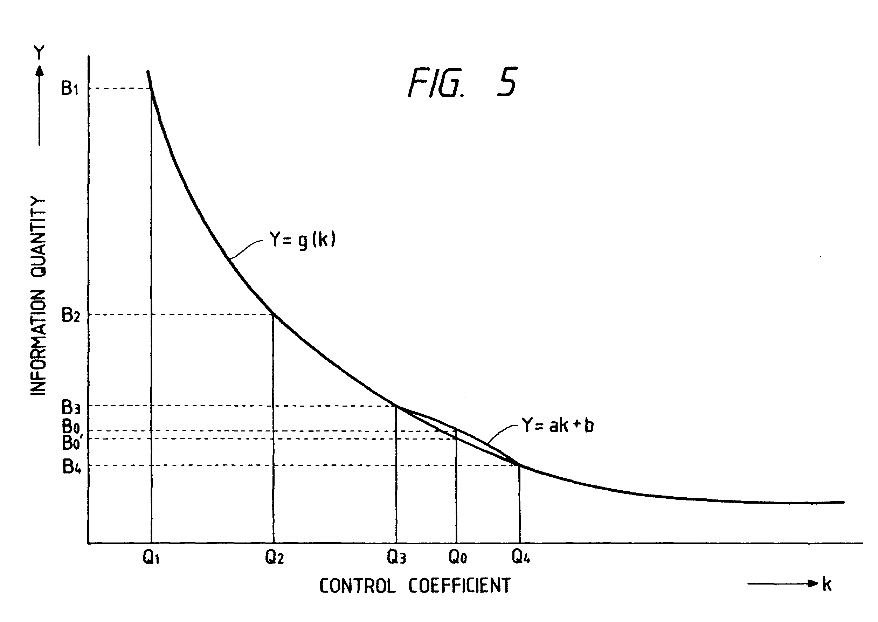

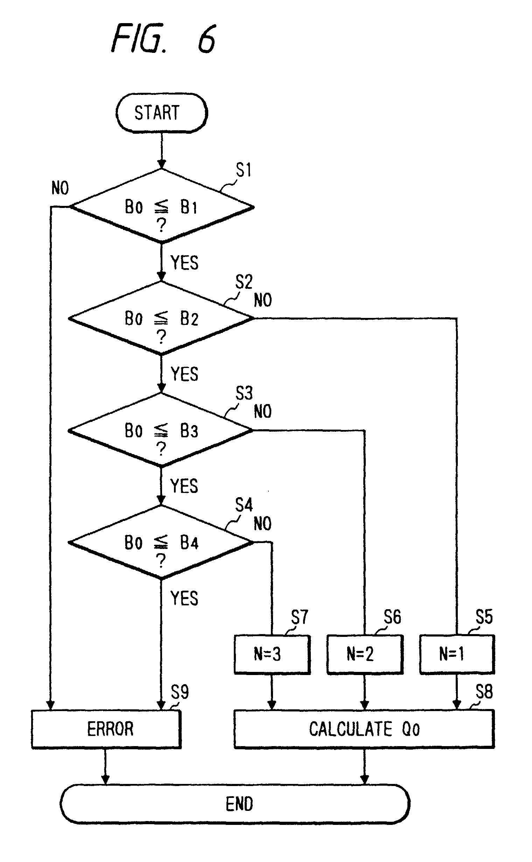

Then, the second exemplary embodiment will now be described with reference to Figs. 5 and 6.

Then, a description will made with reference to a case in which an image to be transmitted is, as shown in Fig. 2, similar to that according to the above-described first exemplary embodiment and one image frame is compressed to 10.23% or less, respectively.

That is, it is necessary to constitute a structure in such a manner that the target compression rate is set to 10.23% and an optimum control coefficient $Q_0$ is given to the encoding unit (0) given reference numeral 28 shown in Fig. 4 in order to obtain an approximate value which does not exceed the target compression rate 10.23%.

Fig. 5 illustrates a process of determining the optimum control coefficient $Q_0$.

The encoding system is arranged to employ the so-called ADCT system shown in Fig. 8 similarly to the first embodiment.

Then, an assumption is made that four control coefficients $Q_1$, $Q_2$, $Q_3$ and $Q_4$ are selected which hold relationships $Q_1 < Q_0$ and $Q_0 < Q_4$.

Fig. 5 illustrates the relationship between control coefficient K for an ordinary one image frame and the compressed information quantity Y thereof. The above-described relationship between Y and K is expressed by function g, that is, $Y = g(K)$.

In this state, $Y = g(K)$ closely approximates a log curve.

Then, encoding using control coefficient $Q_1$ is performed in the encoding unit (1) given reference numeral 22 shown in Fig. 4 so that compressed information quantity $B_1$ is obtained. Encoding using control coefficient $Q_2$ is performed in the encoding unit (2) given reference numeral 23 shown in Fig. 4 so that compressed information quantity $B_2$ is obtained. Encoding using control coefficient $Q_3$ is performed in the encoding unit (3) given reference numeral 24 shown in Fig. 4 so that compressed information quantity $B_3$ is obtained. Encoding using control coefficient $Q_4$ is performed in the encoding unit (4) given reference numeral 25 shown in Fig. 4 so that compressed information quantity $B_4$ is obtained. Then, the flow of the comparison and calculating unit 26 shown in Fig. 4 will now be described with reference to Fig. 6.

In the comparison and calculating unit 26 shown in Fig. 4, target compression information quantity $B_0$ is subjected to comparisons with $B_1$, $B_2$, $B_3$ and $B_4$ obtained by the above-described compressing and encoding trial such that $B_0 \leqq B_1$, $B_0 \leqq B_2$, $B_0 \leqq B_3$ and $B_0 \leqq B_4$, respectively (steps S1 to S4) so as to obtain N with which $B_0$ holds

a relationship $B_N \leqq B_0 \leqq B_{N+1}$ (wherein N is a positive integer) (steps S5 to S7). If N is not obtained, an error is recognized (step S9).

At the time at which N is detected, straight line $Y = aK + b$ (where a and b are constants) which connects $(Q_N, B_N)$ and $(Q_{N+1}, B_{N+1})$ to each other is calculated in the comparison and calculating unit 26 shown in Fig. 4. As a result, control coefficient K is obtained from Equation (5):

$$K = \frac{(Q_{N+1} - Q_N) \cdot Y - Q_{N+1} \cdot B_N + Q_N \cdot B_{N+1}}{B_{N+1} - B_N} \qquad (5)$$

Then, by making $B_0$ shown in Fig. 5 to correspond to the desired compression ratio (10.23%) so that optimum control coefficient $Q_0$ can be obtained by substituting $B_0$ into Y in Equation (5).

$$Q_0 = \frac{(Q_{N+1} - Q_N) \cdot B_0 - Q_{N+1} \cdot B_N + Q_N \cdot B_{N+1}}{B_{N+1} - B_N} \qquad (6)$$

Actually, since the compressed information quantity generated with optimum control coefficient $K = Q_0$ has a value given by $Y = g(K)$, the actual quantity is $B_0'$. This means that: $B_0 > B_0$, so that the desired compression ratio is not exceeded in any case. Therefore, a data overload of the transmission path is avoided.

Among the above-described values, $Q_1$, $Q_2$, $Q_3$, $Q_4$ and $B_0$ are known constant values in the apparatus, therefore it is necessary to be capable of obtaining only $B_1$, $B_2$, $B_3$ and $B_4$ by trial encoding. Therefore, the encoding units (1), (2), (3) and (4) given reference numerals 22, 23, 24 and 25 shown in Fig. 4 are only required to generate the compressed information quantities.

Although the above-described Equation (6) is calculated in the above-described comparison and calculating unit 26 shown in Fig. 4, the calculation may be performed by using a CPU or the like or a look-up table which uses a ROM or a RAM or the like. Although the above-described second exemplary embodiment is arranged in such a manner that the number of the encoding units for generating only the encoded information quantity is made to be four, the above-described number can be increased, resulting an effect to be obtained in that the optimum control coefficient infinitely approximates the desired compressed information quantity while being limited to be smaller than the same. As a result, encoding can efficiently be performed. Furthermore, although the above-described ordinary encoding system as shown in Fig. 8 is employed in the encoding unit for the purpose of easily making the description, another encoding system may be employed. In addition, in the above-described case, the DCT unit shown in Fig. 8 is commonly employed in the encoding units. Therefore, due to the necessity of providing a plurality thereof, they can be unified into one unit.

The frequency conversion is not limited to DCT since other types of orthogonal conversion may be employed.

In addition, the block size arranged to be 8 x 8 pixels is not limited to this arrangement.

Furthermore, the encoding method applied after the quantization has been completed is not limited to the Huffman encoding method. For example, an arithmetical encoding method or a run-length encoding method may be employed.

As described above, the quantity of compressed data can be satisfactorily controlled.

Third exemplary Embodiment

The structure of a third embodiment of an image encoding apparatus is characterized by a means for adjusting the first-order term, or the zero order term, or both the zero and first order terms of the applied linear approximation.

The basic block structure according to this embodiment is arranged to be similar to that shown in Fig. 1.

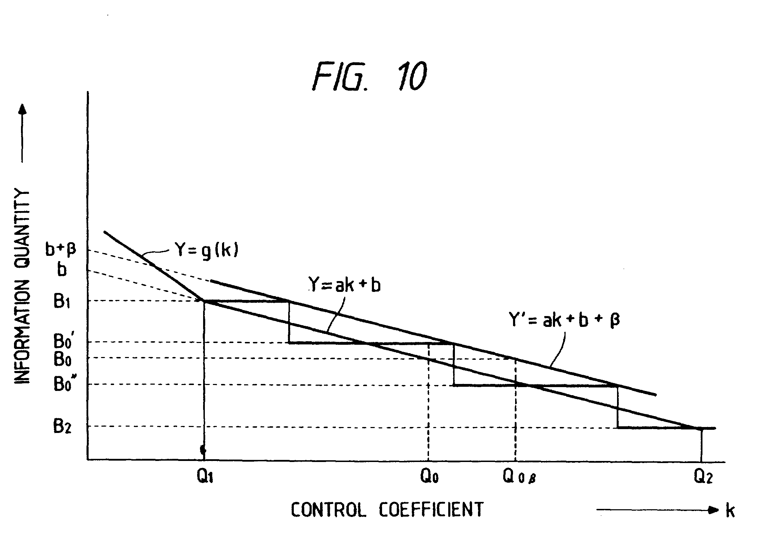

Fig. 10 illustrates a case in which control coefficient K and information quantity Y hold a special relationship.

In a case where the information quantities obtained by quantization using control coefficients $Q_1$ and $Q_2$ are $B_1$ and $B_2$, respectively, and where the original information quantity is $B_0$, the control coefficient which is obtained by linear approximation $Y = aK + b$ as shown in Fig. 10 becomes $Q_0$. Furthermore, if the actual information quantity $B_0'$, obtained through the quantization is performed using control coefficient $Q_0$, holds a relationship $B_0' > B_0$, data overload occurs.

Therefore, by adding a predetermined information quantity $\beta$ (a constant) to approximation curve $Y = aK + b$ obtained with information quantities $B_1$ and $B_2$, approximation $Y' = aK + b + \beta$ can be obtained. Then, quantization with control coefficient $Q_{0\beta}$ obtained with desired information quantity $B_0$ is performed so that the actual information quantity becomes $B_0''$. As a result, a relationship $B_0'' < B_0$ and thereby the quantity becomes the desired information quantity $B_0$ or less. Therefore, information can be quantized and compressed so as to be transmitted while preventing data overload.

Since Y = g (K) is, in Fig. 10, ordinarily a downward convex curve, it is preferable that the above-described constant $\beta$ holds a relationship $\beta > 0$. By adding $\beta$ thus-determined, the possibility of occurrence of a data overload can be decreased. The structure may be arranged in such a manner that $\beta$ is set manually to the calculating unit 5 in accordance with the supplied image or the same is automatically set in accordance with the characteristics of the image.

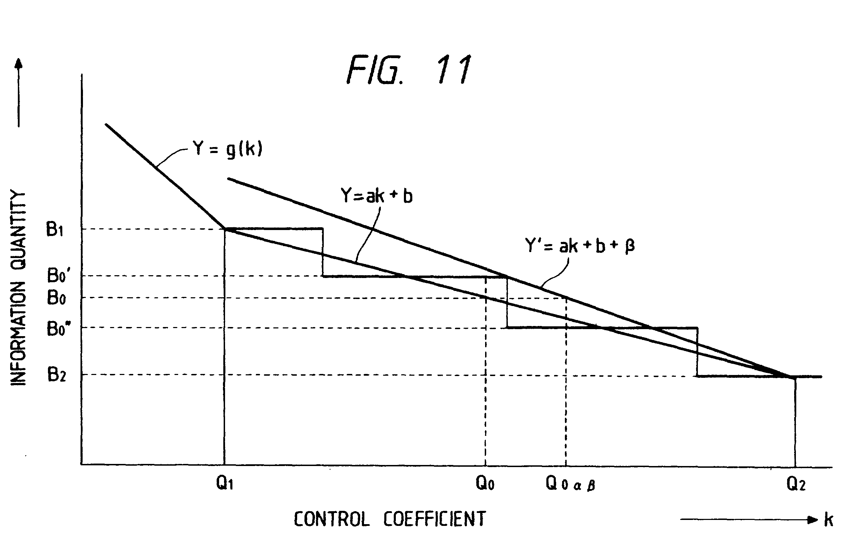

Fig. 11 illustrates control coefficient K and information quantity Y in a case where approximation Y = aK + b shown in Fig. 10 is transformed (amended) into Y' = (a + $\alpha$) K + b + $\beta$. As described with reference to Fig. 3, by performing quantization with desired information quantity $B_0$ and control coefficient $Q_{0\alpha\beta}$ obtained by approximation Y = (a + $\alpha$) K + b + $\beta$, the actual information quantity becomes $B_0''$ which holds a relationship $B_0'' < B_0$. Since the information quantity does not exceed the desired information quantity $B_0$, quantization and compression can be performed so as to transmit information.

Furthermore, it is preferable that $\alpha$ holds a relationship $\alpha > 0$, similarly to $\beta$.

According to the above-described embodiment, the above-described adapted linear approximation is applied. As a result, quantization compression can be performed while preventing a data overload even if the image is an image of a type in which the quantization control coefficient and the information quantity hold a special relationship.

Fourth exemplary Embodiment

A fourth embodiment of an image encoding apparatus is characterized in that, in a case where the desired information quantity is larger than the information quantity generated by the trial made with the first control coefficient as a result of the trial of a plurality of variable-length compressing and encoding with M-types of control coefficients, or in a case where the information quantity is smaller than the information quantity generated by the trial made with the M-th control coefficient, variable-length encoding is performed using a predetermined constant value as the control coefficient.

Since the basic block structure according to this embodiment is the same as that shown in Fig. 1, its description is omitted here.

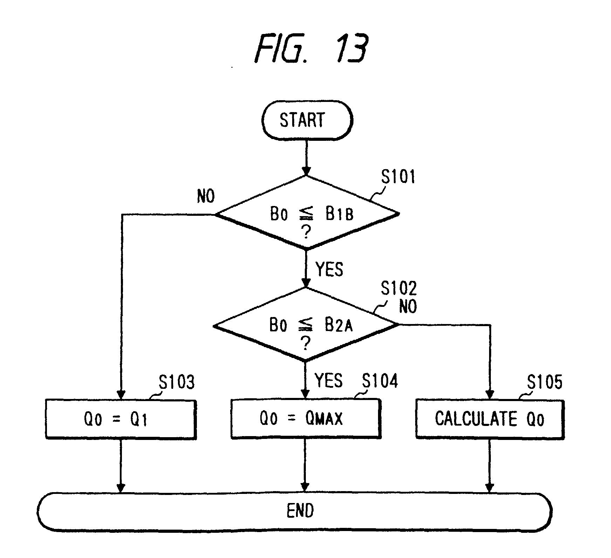

Fig. 13 is a flow chart for the calculation to be performed in the structure according to this embodiment.

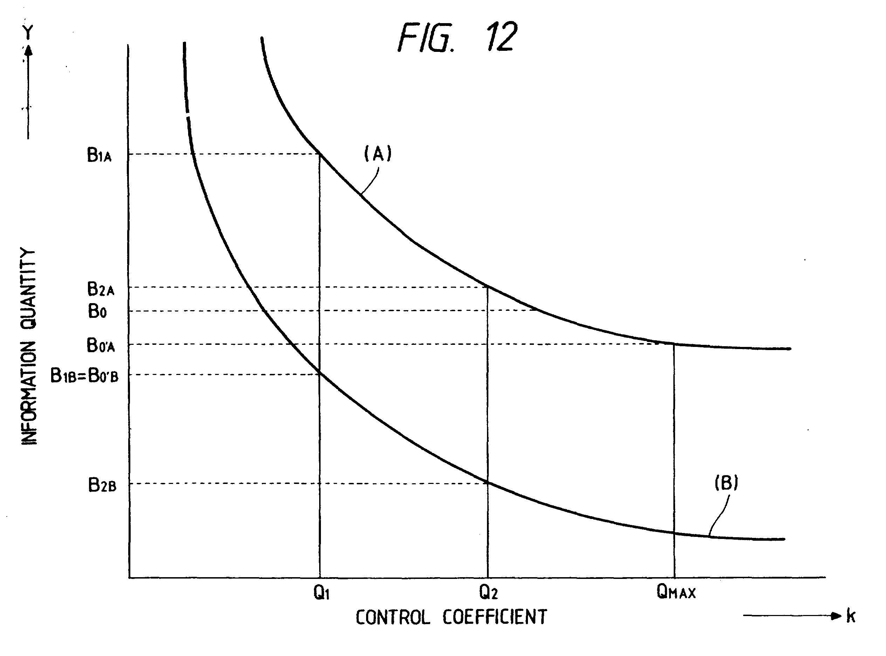

In a case where the image is very simple such as a colour bar and the original information quantity is small as designated by curve (B) shown in Fig. 12 as a result of a trial performed by using two control coefficients $Q_1$ and $Q_2$ shown in Fig. 1, a relationship $B_0 > B_{1B}$ is held (S101) and the calculating unit 5 shown in Fig. 1 transmits $Q_1$ to the encoding unit 7 while making $Q_0 = Q_1$.

In a case where the image is, as designated by curve (A) shown in Fig. 12, very complicated such as a zone plate and the original information quantity is very large as a result of the trial performed by using two control coefficients $Q_1$ and $Q_2$, a relationship $B_0 < B_{2A}$ is held (S102) and the calculating unit 5 shown in Fig. 1 transmits $Q_{MAX}$ to the encoding unit 7 while making $Q_0 = Q_{MAX}$ (S104). In a case where $B_{2A} < B_0 \leqq B_{1B}$, $Q_0$ is calculated similarly to the first embodiment (S105).

As a result, the desired compression ratio is not exceeded in any case and a data overload will not take place on the transmission path.

Fifth exemplary Embodiment

A fifth embodiment of an image encoding apparatus is a modification to the second exemplary embodiment. Since the basic structure is the same as that shown in Fig. 4, its description is omitted here.

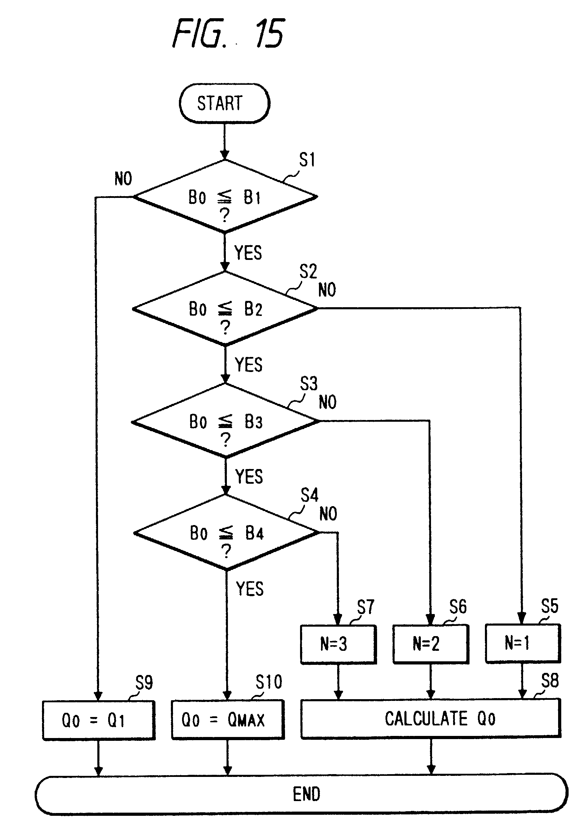

Fig. 15 is a flow chart for the calculation to be performed in the structure according to this embodiment, the flow chart being basically arranged to be the same as that shown in Fig. 6.

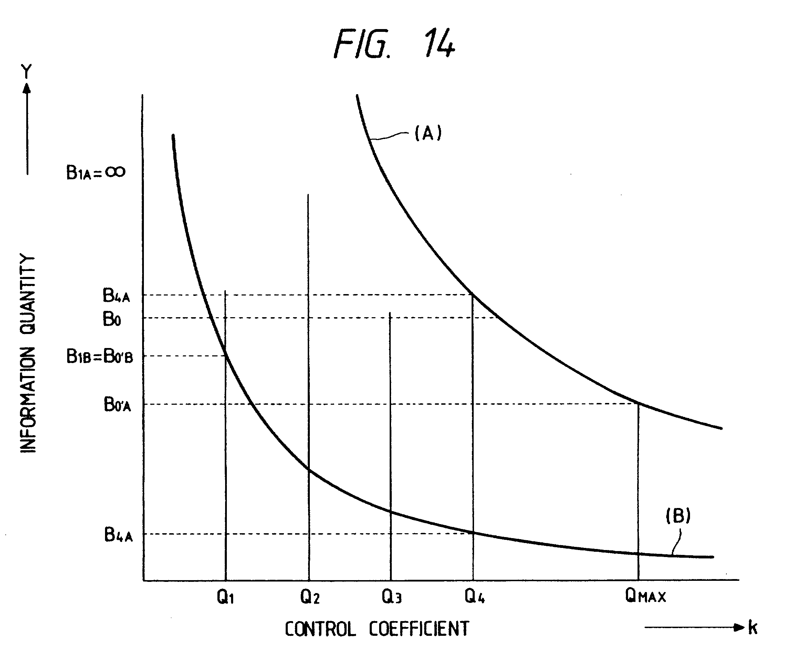

In a case where the image is very simple such as a colour bar and the original information quantity is small as designated by curve (B) shown in Fig. 14 as a result of a trial performed by using four control coefficients $Q_1$, $Q_2$, $Q_3$ and $Q_4$ shown in Fig. 14, a relationship $B_0 > B_{1B}$ is held and the calculating unit 26 shown in Fig. 4 performs a transmission to the encoding unit (0) while making $Q_0 = Q_1$ (S9).

In a case where the image is, as designated by curve (A) shown in Fig. 14, very complicated such as a zone plate and the original information quantity is very large as a result of the trial performed by using four control coefficients $Q_1$, $Q_2$, $Q_3$ and $Q_4$, a relationship $B_0 < B_{4A}$ is held and the calculating unit 26 shown in Fig. 4 performs a transmission to the encoding unit 0 while making $Q_0 = Q_{MAX}$ (S10) .

Although the above-described embodiment is arranged in such a manner that the relationship between the control coefficients and the compressed information quantities are expressed by a log curve, the actual relationship is sometimes different from this such that it can sometimes be approximated by a quadratic curve or a cubic curve depending upon the way of the quantization and the type of encoding employed in the encoding unit. However, any of the cases are commonly characterized in that each curve is a downward-convex curve (the tangent is always present below the curve). Therefore, the above-described method of determining the control coefficient can be effectively employed because of the above-described characteristics.

Sixth exemplary Embodiment, embodying the present invention

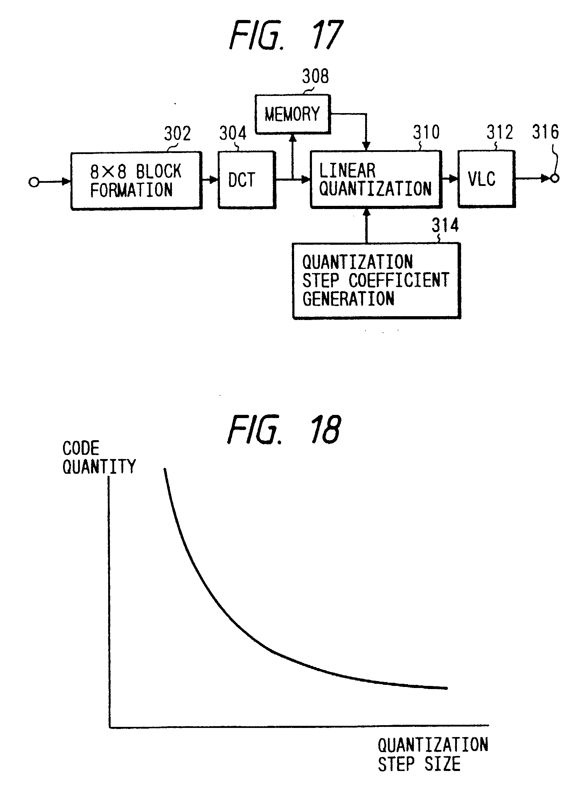

In general, in a case where an image signal is transmitted, the transmission path possesses a transmission capacity per unit time. Therefore, it is preferable that, in a case where one frame must be transmitted at a predetermined moment as in case of a moving image, the quantity of the code to be transmitted be a quantity fixed in units of frames or image blocks. Although the overall quantity of the code can be adjusted by changing the quantization step coefficient in the quantization process, the quantization step coefficient must be forecast in order to cause the overall quantity of encoded data to be included in the set code quantity because the quantity of encoded data is different depending upon the image. The relationship between the above-described quantization step coefficient and the overall quantity of the encoded data establishes a monotone decreasing function. Furthermore, an average image is expressed by a logarithmic curve as shown in Fig. 18.

As a method of estimating the quantization step size by utilizing the above-described characteristics, according to the above-described embodiments, there has been described a method in which different trial quantization step coefficients are applied and the quantity of code obtained for each trial coefficient is measured and a linear interpolation is then performed to determine the approximate value of the optimum quantization step coefficient.

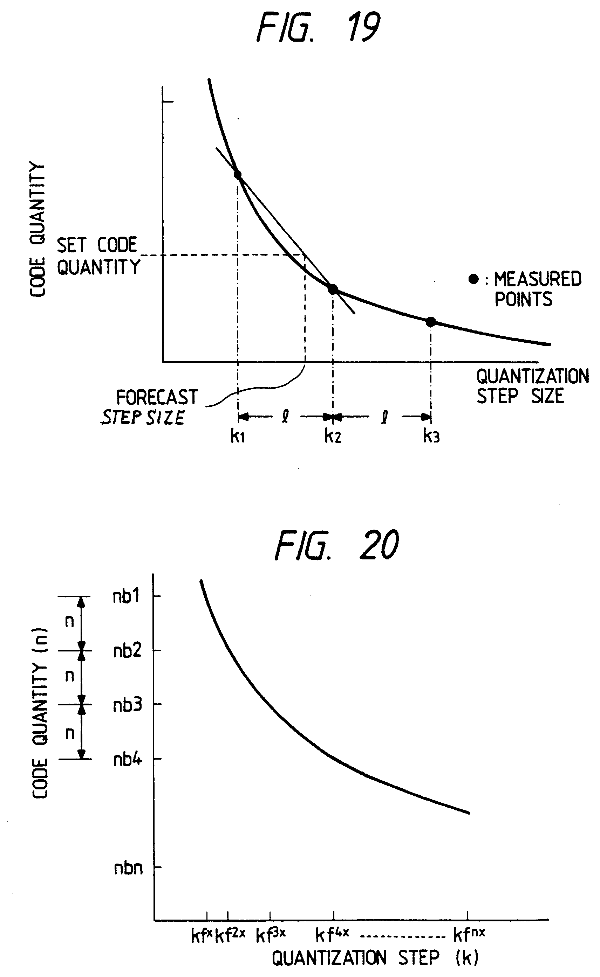

Fig. 19 illustrates the above-described method of estimating the quantization step size.

However, the above-described method encounters a problem in that many trials must be provided in order to reduce the error from the set quantity of the code, a plurality of trials must be performed in parallel in order to shorten the time required for estimation and the size of hardware of the apparatus cannot be reduced if the number of the measuring points is increased in order to improve the accuracy of the measured results.

According to the sixth embodiment to be described below, there is provided an encoding apparatus for quantizing converted data obtained by converting image information into the spatial frequency domain in units of blocks composed of a plurality of pixels, and for variable-length encoding the quantized converted data, the encoding apparatus comprising means for measuring the quantity of code by, in parallel, performing quantization followed by variable-length encoding (VLC) with plural predetermined, respectively different quantization step coefficients, and a calculating means for estimating the quantization step coefficient for a desired quantity of the code by a linear approximation, from the measured quantity of the code, wherein the intervals between the trial quantization step coefficients, for each of which the quantity of the code is measured, are widened in proportion to the value of the quantization step coefficient.

Accordingly, the approximation error of the estimated quantization quantity can be approximated to a substantially constant value in comparison to a case in which the trial coefficients are equispaced. In particular, in a case where the quantity of the quantized code is large, the intervals between the trial coefficients can be narrowed. Therefore, an effect can be obtained in that the approximation error of the above-described estimated quantization quantity can be reduced. As a result, the estimation accuracy of the quantity of the quantized code can be improved while necessitating a small number of trials coefficients.

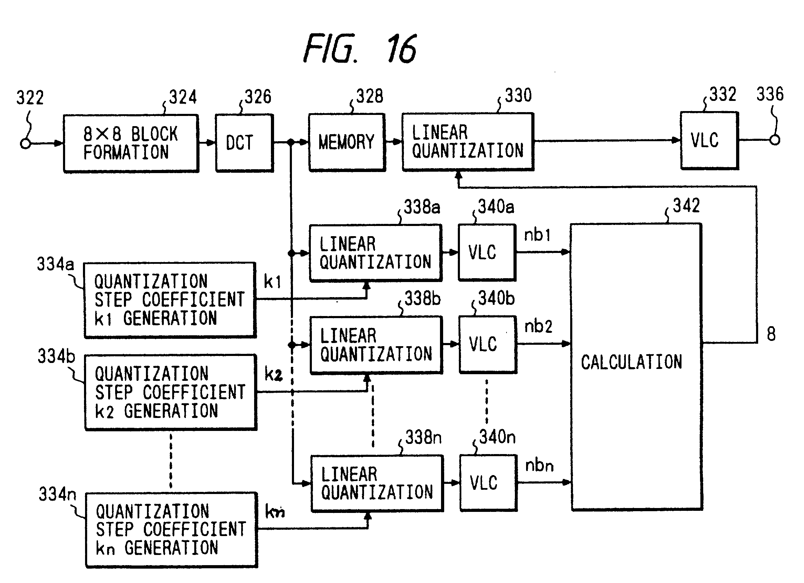

Fig. 16 is a block diagram which illustrates the sixth embodiment of an encoding apparatus which embodiment implements the present invention and structure in such a manner that the present invention is applied to a transmission apparatus for transmitting an image signal.

Referring to Fig. 16, reference numeral 322 represents an input terminal for receiving a digital image signal. The image signal supplied for each line is, in a block forming circuit 324, divided into blocks each of which is composed of, for example, 8 vertical pixels and 8 horizontal pixels.

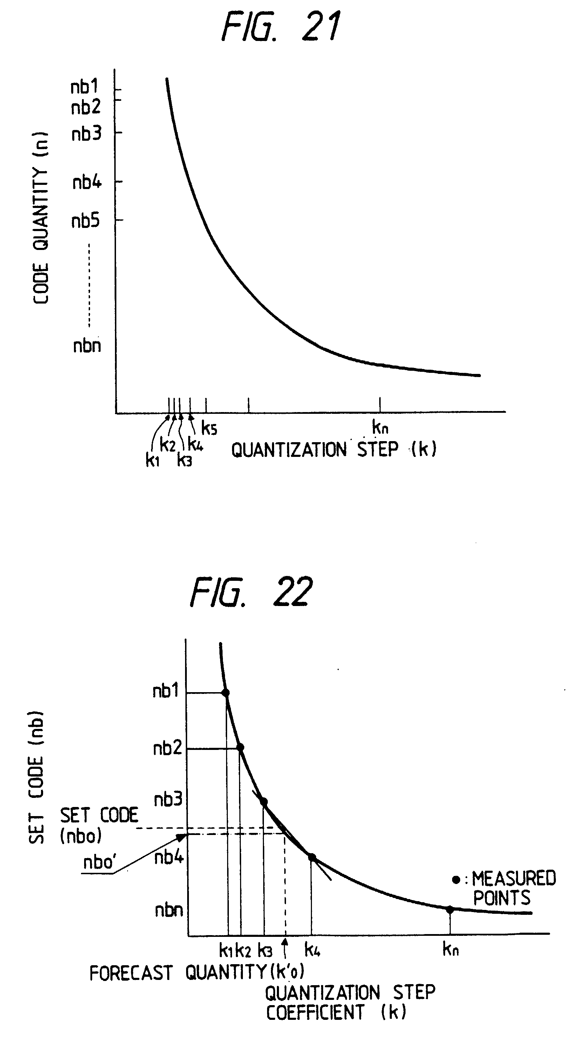

Pixel data in each block is converted into spatial frequency data by a DCT conversion circuit 326. The above-described conversion data is temporarily stored in a memory 328 and as well as the same is linearly quantized in quantizing circuits 338a to 338n with different quantization step coefficients $k_1$ to $k_n$ received from generating circuits 334a to 334n for generating the predetermined quantization step coefficients $k_1$ to $k_n$. According to this embodiment, quantization step coefficients $k_1$ to $k_n$ generated in the generating circuits 334a to 334n are not made in such a manner that the step interval is equalized as shown in Fig. 19 but the same is widened in inverse proportion to the quantity of the quantized code as shown in Fig. 22.

Data quantized by the quantizing circuits 338a to 338n is variable-length encoded by VLCs 340a to 340n so that code quantities $nb_1$ to $nb_n$ for each data are obtained. However, the actual encoded data is not transmitted here but only the quantity of the code is measured before it is transmitted to a calculating circuit 342.

In the calculating circuit 342, code quantities $nb_1$ to $nb_n$ at each measuring point and set code quantity $nb_0$ determined from the transmission rate are subjected to a comparison so as to identify a measuring point which is larger than $nb_0$ and nearest $nb_0$ and a measuring point which is smaller than $nb_0$ and nearest $nb_0$ are approximated by a straight line. As a result, quantization step coefficient $k_0$ with respect to set code quantity $nb_0$ is estimated before it is transmitted to the quantizing circuit 330. The quantizing circuit 330 receives conversion encoding data transmitted after it has been delayed by a predetermined period by the memory 328 so as to perform the linear quantization with estimated quantizing step coefficient $k_0$ before its result is supplied to a VLC 332.

In the VLC 332, the variable-length encoding operation is performed so that its result is transmitted to the transmission path through a terminal 336 while extremely reducing the error with respect to a predetermined transmission rate.

According to the above-described structure, the relationship between the total code quantity nb and quantization step coefficient k closely approximates a log curve. Therefore, the quantization step coefficient is selected in such a manner that the measuring points are set in an exponential function manner as shown in Fig. 20 so that, for example, the interval between the measured results of the code quantities is made to be equalized and the quantization error is made to be constant.

Furthermore, an image of a type which encounters a quantization error because of its large code quantity can be processed to improve it in such a manner that the measuring points are, as shown in Fig. 21, set adjacent to the points as each of which the quantization step coefficient is small.

Then, this embodiment will now be described in detail with reference to Figs. 16 and 22.

First, two quantization step coefficients $k_3$ and $k_4$ are selected, $k_3$ and $k_4$ being arranged to hold the following relationships with optimum quantization step coefficient $k_0$:

$$k_3 < k_4, \, k_0 < k_4$$

Referring to Fig. 16, the liner quantization and the VLC are performed with the quantization step coefficients $k_3$ and $k_4$ so that compressed code quantities $nb_3$ and $nb_4$ are obtained. Referring to Fig. 22, point $(k_3, nb_3)$ and point $(k_4, nb_4)$ are connected to each other by a straight line so that estimated value $k_0'$ of the quantization step coefficient is obtained from code quantity $nb_0$ set for each predetermined period.

Actually, since optimum quantization step coefficient $k_0$ with respect to $nb_0$ is on a curve shown in Fig. 22, compressed code quantity $nb_0'$ with respect to $k_0'$ and $nb_0$ always hold the following relationship:

$$nb_0' < nb_0$$

As a result, the desired code quantity cannot be exceeded in any case so that it can be quantized.

As a result of the above-described structure, in a case where the code quantity is small and thereby the estimated error of the quantization step coefficient becomes small, the measuring points is decreased. In a case where the code quantity is large and thereby the error becomes large, the measuring points are increased. Therefore, the estimation accuracy of the quantization step coefficient can be improved.

Although the above-described embodiments are arranged in such a manner that the size of the formed block is made to be 8 x 8, the size may be varied.

Furthermore, an orthogonal conversion (spatial frequency conversion) other than DCT may be employed.

As described above, according to the image processing apparatus according to the present invention, the data quantity for a predetermined region can be set to a desired data quantity while reducing the quantity of hardware and exhibiting satisfactory high accuracy.

The above-described embodiments are not limited to a moving image but the same can be applied to a still image.

The above described invention finds application not only in the processing of images to be displayed by a monitor, but also in image reproduction by printing such as by laser beam or ink jet.

Examples of image processing apparatus described herein include:

(a) An image processing apparatus comprising:

input means for inputting image data;
first encoding means for encoding the image data with first parameter;
second encoding means for encoding the image data with second parameter;
first counting means for counting the first amount of encoded image data encoded by said first encoding means;
second counting means for counting second amount of encoded image encoded by said second encoding means; and
calculating means for calculating third parameter, with which the image data is encoded to a predetermined amount of encoded data, in accordance with both of the first and the second amounts of encoded image data.

(b) An image processing apparatus as in (a) wherein said calculating means calculates the third parameter by using a primary approximation in accordance with the first and the second amounts.

(c) An image processing apparatus as in (a) wherein said first and second encoding means respectively include quantizing means and said parameter is a quantising step.

(d) An image processing apparatus as in (a) wherein said first and second encoding means perform encoding in parallel.

(e) An image processing apparatus as in (a) wherein the value of said second parameter is larger than that of said first parameter and said first amount is larger than said second amount.

(f) An image processing apparatus comprising:

 input means for inputting image data;
 first encoding means for encoding the image data with first parameter;
 second encoding means for encoding the image data with second parameter;
 first counting means for counting first amount of encoded image data encoded by said first encoding means; and
 second counting means for counting second amount of encoded image data encoded by said second encoding means,
 wherein, in a case where said first and second amounts of encoded image data is deviated from a predetermined range, the image data is encoded by using a predetermined parameter.

(g) An image processing apparatus as in (f) wherein said first and second encoding means perform encoding by employing orthogonal transformation.

(h) An image processing apparatus as in (f) wherein said first and second encoding means perform encoding in parallel.

(i) An image process apparatus as in (f) wherein said input means sequentially inputs a plurality of pictures.

(j) An image processing apparatus as in (f) further comprising memory means for storing said predetermined parameter.

(k) An image processing apparatus comprising:

 input means for inputting image data;
 first quantizing means for quantizing the image data with first quantizing step;
 second quantizing means for quantizing the image data with second quantizing step; and
 third quantizing means for quantizing the image data with third quantizing step,
 wherein said first, second and third quantizing means perform quantizing in parallel; and
 the difference between said second quantizing step and said third quantizing step is larger than the difference between said first quantizing step and said second quantizing step on condition that the first quantizing step, the second quantizing step and the third quantizing step increases in this sequential order.

(l) An image processing apparatus as in (k) further comprising counting means for counting the amount of image data quantized by said first, second and third quantizing means.

(m) An image processing apparatus as in (l) further comprising processing means for processing the input data input by said input means in accordance with the amount counted by said counting means.

(n) An image process apparatus as in (m) wherein said processing means performs variable-length coding.

(o) An image processing apparatus comprising:

 input means for inputting image data;
 first encoding means for encoding the image data with first parameter;

second encoding means for encoding the image data with second parameter;

first counting means for counting first amount of encoded image data encoded by said first encoding means;

second counting means for counting second amount of encoded image data encoded by said second encoding means; and

calculating means for calculating third parameter, with which the image data is encoded to a predetermined amount of data, by a primary approximation by using the first and the second amounts of encoded image data.

(p) An image processing apparatus as in (o) wherein said first and second encoding means respectively include quantizing means and said parameter is a quantizing step.

(q) An image processing apparatus as in (o) wherein said first and second encoding means perform encoding in parallel.

(r) An image processing apparatus as in (o) wherein the value of said second parameter is larger than that of said first parameter and said first amount is larger than said second amount.

Examples of image processing methods disclosed herein include:

(s) An image processing method comprising steps of:

input step of inputting image data;

first encoding step of encoding the image data with first parameter;

second encoding step of encoding the image data with second parameter;

first counting step of counting the first amount of encoded image data encoded in said first encoding step;

second counting step of counting second amount of encoded image data encoded in said second encoding step; and

calculating step of calculating third parameter, with the image data is encoded to a predetermined amount of encoded data, in accordance with both of the first and the second amounts of encoded image data.

(t) An image processing method comprising steps of:

input step of inputting image data;

first encoding step of encoding the image data with first parameter;

second encoding step of encoding the image data with second parameter;

first counting step of counting first amount of encoded image data encoded in said first encoding step; and

second counting step of counting second amount of encoded image data encoded in said second encoding step,

wherein, in a case where said first and second amounts of encoded image data is deviated from a predetermined range, the image data is encoded by using a predetermined parameter.

(u) An image processing method comprising steps of:

input step of inputting image data;

first quantising step of quantising the image data with first quantising step;

second quantising step of quantising the image data with second quantising step; and

third quantising step of quantising the image data with third quantising step;

wherein said first, second and third quantising steps are executed in parallel;

the difference between said second quantising step and said third quantising step is larger than the difference between said first quantising step and said second quantising step on condition that the first quantising step, the second quantising step and the third quantising step increases in this sequential order.

(v) An image processing method comprising steps of:

input step of inputting image data;

first encoding step of encoding the image data with first parameter;

second encoding step of encoding the image data with second parameter;

first counting step of counting first amount of encoded image data encoded in said first encoding step;

second counting step of counting second amount of encoded image data encoded in said second encoding step; and

calculating means for calculating third parameter, with which the image data is encoded to a predetermined amount of data, by a primary approximation by using the first and the second amounts of encoded image data.

**Claims**

1.  An image processing apparatus comprising:

    supplying means (326) for supplying spatial frequency components corresponding to an input image;
    encoding means (330) for encoding the spatial frequency components; and
    control means (338, 340, 342) for controlling an encoding parameter ($K_0$) of said encoding means,

       said control means comprising:

    first counting means (338a, 340a) supplied with, by said supplying means, said spatial frequency components for encoding thereof using the same encoding method as said encoding means using a first encoding parameter ($K_1$) for producing a first data amount value ($nb_1$) corresponding to the thus obtained amount of encoded image data,
    second counting means (338b, 340b) supplied with, by said supplying means, said spatial frequency components for encoding thereof using the same encoding method as said encoding means using a second encoding parameter ($K_2$) different from the first encoding parameter for producing a second data amount value ($nb_2$) corresponding to the thus obtained amount of encoded image data, and
    determining means (342) for determining said encoding parameter of said encoding means in accordance with said first and second data amount values and said first and second encoding parameters such that a target amount of code generated by said encoding means is approximated, and wherein
    said first and second counting means supplied with the spatial frequency components from said supplying means encode said components and produce the first and second data amount values respectively in parallel.

2.  An apparatus according to claim 1, wherein said supplying means applies an orthogonal transform to said input image data.

3.  An apparatus according to claims 1 and 2, wherein said encoding means comprises quantisation means (330) for quantising the spatial frequency components and said encoding parameter is a quantisation parameter.

4.  An apparatus according to claims 1 to 3, wherein said encoding means comprises coding means (332) for performing a variable length coding on the spatial frequency components.

5.  An apparatus according to claims 1 to 4, including input means to input data representing a sequence of pictures.

6.  An apparatus according to claims 1 to 5, further comprising delay means (328) for delaying the spatial frequency components until said determining means has determined the encoding parameter.

7.  An apparatus according to claims 1 to 6, further comprising transmitting means (9) for transmitting the image data encoded by said encoding means via a transmission path.

8.  An image processing method comprising:

    a supplying step of supplying spatial frequency components corresponding to an input image;
    an encoding step of encoding the spatial frequency components; and
    a controlling step of controlling an encoding parameter ($K_0$) of said encoding step,

       said control step comprising:

    a first counting step comprising encoding said spatial frequency components using the same encoding method as said encoding step using a first encoding parameter ($K_1$) and comprising producing a first data amount value ($nb_1$) corresponding to the thus obtained amount of encoded image data,
    a second counting step comprising encoding said spatial frequency components using the same encoding method as said encoding step using a second encoding parameter ($K_2$) different from the first encoding parameter and comprising producing a second data amount value (nb$_2$) corresponding to the thus obtained amount of encoded image data, and

a determining step of determining said encoding parameter of said encoding step in accordance with said first and second data amount values and said first and second encoding parameters such that a target amount of code generated by said encoding step is approximated, and wherein:

the spatial frequency components are supplied for both said first and second counting steps from common supplying means and encode said components and produce the first and second data amounts respectively in parallel.

**Patentansprüche**

1. Bildverarbeitungsvorrichtung mit

    einer Zufuhreinrichtung (326) zur Zufuhr von Ortsfrequenzkomponenten entsprechend einem Eingabebild;
    einer Kodiereinrichtung (330) zur Kodierung der Ortsfrequenzkomponenten; und
    einer Steuereinrichtung (338, 340, 342) zur Steuerung eines Kodierparameters (k$_0$) der Kodiereinrichtung; wobei die Steuereinrichtung
    eine erste Zähleinrichtung (338a, 340a), der die Ortsfrequenzkomponenten zu deren Kodierung mittels demselben Kodierverfahren wie die Kodiereinrichtung unter Verwendung eines ersten Kodierparameters (k$_1$) von der Zufuhreinrichtung zugeführt werden, zur Erzeugung eines ersten der auf diese Art und Weise erhaltenen Menge an kodierten Bilddaten entsprechenden Datenmengenwerts (nb$_1$),
    eine zweite Zähleinrichtung (338b, 340b), der die Ortsfrequenzkomponenten zu deren Kodierung mittels demselben Kodierverfahren wie die Kodiereinrichtung unter Verwendung eines sich von dem ersten Kodierparameter unterscheidenden zweiten Kodierparameters (k$_2$) von der Zufuhreinrichtung zugeführt werden, zur Erzeugung eines zweiten der auf diese Art und Weise erhaltenen Menge an kodierten Bilddaten entsprechenden Datenmengenwerts (nb$_2$), sowie
    eine Bestimmungseinrichtung (342) zur derartigen Bestimmung des Kodierparameters der Kodiereinrichtung entsprechend den ersten und zweiten Datenmengenwerten sowie den ersten und zweiten Kodierparametern aufweist, daß eine von der Kodiereinrichtung erzeugte Zielcodemenge abgeschätzt wird, und wobei
    die ersten und zweiten Zähleinrichtungen, denen die Ortsfrequenzkomponenten von der Zufuhreinrichtung zugeführt werden, die Komponenten kodieren und die ersten und zweiten Datenmengenwerte jeweils parallel erzeugen.

2. Vorrichtung nach Anspruch 1,
    wobei die Zufuhreinrichtung eine orthogonale Transformation auf die eingegebenen Bilddaten anwendet.

3. Vorrichtung nach Anspruch 1 oder Anspruch 2,
    wobei die Kodiereinrichtung eine Quantisierungseinrichtung (330) zur Quantisierung der Ortsfrequenzkomponenten aufweist und der Kodierparameter ein Quantisierungsparameter darstellt.

4. Vorrichtung nach einem der Ansprüche 1 bis 3,
    wobei die Kodiereinrichtung ein Kodierelement (332) zur Durchführung einer Kodierung mit variabler Länge bei den Ortsfrequenzkomponenten aufweist.

5. Vorrichtung nach einem der Ansprüche 1 bis 4,
    mit einer Eingabeeinrichtung zur Eingabe von eine Bildabfolge darstellenden Daten.

6. Vorrichtung nach einem der Ansprüche 1 bis 5,
    weiterhin mit einer Verzögerungseinrichtung (328) zur Verzögerung der Orttsfrequenzkomponenten bis die Bestimmungseinrichtung den Kodierparameter bestimmt hat.

7. Vorrichtung nach einem der Ansprüche 1 bis 6,
    weiterhin mit einer Übertragungseinrichtung (9) zur Übertragung der mittels der Kodiereinrichtung kodierten Bilddaten über einen Übertragungspfad.

8. Bildverarbeitungsverfahren mit

einem Zufuhrschritt zur Zufuhr von Ortsfrequenzkomponenten entsprechend einem Eingabebild;

einem Kodierschritt zur Kodierung der Ortsfrequenzkomponenten; und

einem Steuerschritt zur Steuerung eines Kodierparameters ($k_0$) des Kodierschritts; wobei die Steuereinrichtung

einen die Kodierung der Ortsfrequenzkomponenten mittels demselben Kodierverfahren wie bei dem Kodierschritt unter Verwendung eines ersten Kodierparameters ($k_1$) beinhaltenden und die Erzeugung eines ersten der auf diese Art und Weise erhaltenen Menge an kodierten Bilddaten entsprechenden Datenmengenwerts ($nb_1$) beinhaltenden ersten Zählschritt,

einen die Kodierung der Ortsfrequenzkomponenten mittels demselben Kodierverfahren wie bei dem Kodierschritt unter Verwendung eines sich von dem ersten Kodierparameter unterscheidenden zweiten Kodierparameters ($k_2$) beinhaltenden und die Erzeugung eines zweiten der auf diese Art und Weise erhaltenen Menge an kodierten Bilddaten entsprechenden Datenmengenwerts ($nb_2$) beinhaltenden zweiten Zählschritt, sowie

einen Bestimmungsschritt zur derartigen Bestimmung des Kodierparameters bei dem Kodierschritt entsprechend den ersten und zweiten Datenmengenwerten sowie den ersten und zweiten Kodierparametern aufweist, daß eine durch den Kodierschritt erzeugte Zielcodemenge abgeschätzt wird, und wobei

die Ortsfrequenzkomponenten von einer gemeinsamen Zufuhreinrichtung sowohl bei dem ersten als auch bei dem zweiten Zählschritt zugeführt werden und die Komponenten kodiert und die ersten und zweiten Datenmengen jeweils parallel erzeugt werden.

## Revendications

1. Appareil de traitement d'images comprenant :

des moyens d'alimentation (326) destinés à fournir des composantes de fréquences spatiales correspondant à une image d'entrée ;

des moyens de codage (330) destinés à coder les composantes de fréquences spatiales ; et

des moyens de commande (338, 340, 342) destinés à commander un paramètre de codage ($k_0$) desdits moyens de codage,

lesdits moyens de commande comportant :

un premier moyen de comptage (338a, 340a) auquel lesdits moyens d'alimentation fournissent lesdites composantes de fréquences spatiales pour leur codage en utilisant le même procédé de codage que celui desdits moyens de codage, en utilisant un premier paramètre de codage ($k_1$) pour produire une première valeur ($nb_1$) de quantité de données correspondant à la quantité ainsi obtenue de données d'image codées,

un second moyen de comptage (338b, 340b) auquel lesdits moyens d'alimentation fournissent lesdites composantes de fréquences spatiales pour leur codage en utilisant le même procédé de codage que celui desdits moyens de codage, en utilisant un second paramètre de codage ($k_2$) différent du premier paramètre de codage pour produire une seconde valeur ($nb_2$) de quantité de données correspondant à la quantité ainsi obtenue de données d'image codées, et

un moyen de détermination (342) destiné à déterminer ledit paramètre de codage desdits moyens de codage en fonction desdites première et seconde valeurs de quantité de données et desdits premier et second paramètres de codage afin de déterminer approximativement une quantité recherchée de code, générée par lesdits moyens de codage, et dans lequel

lesdits premier et second moyens de comptage auxquels lesdits moyens d'alimentation fournissent les composantes de fréquences spatiales codent lesdites composantes et produisent les première et seconde valeurs de quantités de données respectivement en parallèle.

2. Appareil selon la revendication 1, dans lequel lesdits moyens d'application appliquent une transformée orthogonale auxdites données d'image d'entrée.

3. Appareil selon les revendications 1 et 2, dans lequel lesdits moyens de codage comprennent un moyen (330) de quantification destiné à quantifier les composantes de fréquences spatiales et ledit paramètre de codage est un paramètre de quantification.

4. Appareil selon les revendications 1 à 3, dans lequel lesdits moyens de codage comprennent un moyen de codage (332) destiné à exécuter un codage de longueur variable sur les composantes de fréquences spatiales.

**5.** Appareil selon les revendications 1 à 4, comprenant un moyen d'entrée pour l'entrée de données représentant une séquence d'images.

**6.** Appareil selon les revendications 1 à 5, comportant en outre un moyen à retard (328) destiné à retarder les composantes de fréquences spatiales jusqu'à ce que ledit moyen de détermination ait déterminé le paramètre de codage.

**7.** Appareil selon les revendications 1 à 6, comportant en outre des moyens d'émission (9) destinés à émettre les données d'images codées par lesdits moyens de codage par l'intermédiaire d'une voie de transmission.

**8.** Procédé de traitement d'images comprenant :

une étape d'alimentation pour fournir des composantes de fréquences spatiales correspondant à une image d'entrée ;
une étape de codage pour coder les composantes de fréquences spatiales ; et
une étape de commande pour commander un paramètre de codage ($k_0$) de ladite étape de codage,

ladite étape de commande comprenant :

une première étape de comptage comprenant un codage desdites composantes de fréquences spatiales en utilisant le même procédé de codage que celui de ladite étape de codage en utilisant un premier paramètre de codage ($k_1$), et comprenant la production d'une première valeur ($nb_1$) de quantité de données correspondant à la quantité ainsi obtenue de données d'image codées,
une seconde étape de comptage comprenant un codage desdites composantes de fréquences spatiales en utilisant le même procédé de codage que celui utilisé dans ladite étape de codage en utilisant un second paramètre de codage ($k_2$) différent du premier paramètre de codage et comprenant la production d'une seconde valeur ($nb_2$) de quantité de données correspondant à la quantité ainsi obtenue de données d'image codées, et
une étape de détermination pour déterminer ledit paramètre de codage de ladite étape de codage en fonction desdites première et seconde valeurs de quantités de données et desdits premier et second paramètres de codage afin d'établir approximativement une quantité visée de code générée par ladite étape de codage, et dans lequel
les composantes de fréquences spatiales sont fournies pour lesdites première et seconde étapes de comptage à partir de moyens communs d'alimentation et codent lesdites composantes et produisent les première et seconde quantités de données respectivement en parallèle.

## FIG. 1

# FIG. 2

1280 PIXELS

1088 PIXELS

11,141,120 BITS

( 8 BITS/PIXEL )

# FIG. 3

$Y = g(k)$

$Y = ak + b$

INFORMATION QUANTITY

$B_1$

$B_0$

$B_{0'}$

$B_2$

$Q_1$  $Q_0$  $Q_2$

CONTROL COEFFICIENT

$k$

## FIG. 4

IMAGE INPUT

20

21 A/D

27 DELAY UNIT(0)

28 ENCODE UNIT

29 TRANSMISSION BUFFER MEMORY

30 TRANSMISSION PATH

22 ENCODE UNIT (1)   B1

23 ENCODE UNIT (2)   B2

24 ENCODE UNIT (3)   B3

25 ENCODE UNIT (4)   B4

26 COMPARISON & CALCULATION UNIT

Bo

31 RECEPTION BUFFER MEMORY

32 DECODE UNIT

33 D/A

34 IMAGE OUTPUT

EP 0 763 925 B1

FIG. 5

EP 0 763 925 B1

## FIG. 6

FIG. 7

FIG. 8

EP 0 763 925 B1

FIG. 9

FIG. 10

EP 0 763 925 B1

FIG. 11

Y = g(k)

Y = ak + b

Y' = ak + b + β

INFORMATION QUANTITY

$B_1$
$B_0'$
$B_0$
$B_0''$
$B_2$

$Q_1$    $Q_0$    $Q_{0 \alpha \beta}$    $Q_2$

CONTROL COEFFICIENT                    k

EP 0 763 925 B1

*FIG. 12*

# FIG. 13

# FIG. 14

# FIG. 15

```
                        START

                    S1
        NO    ┌────────────┐
        ◄─────┤  B0 ≦ B1   │
              │     ?      │
              └─────┬──────┘
                    │ YES
                    │              S2
              ┌─────┴──────┐        NO
              │  B0 ≦ B2   ├──────────────────────────────┐
              │     ?      │                              │
              └─────┬──────┘                              │
                    │ YES                                 │
                    │              S3                     │
              ┌─────┴──────┐        NO                    │
              │  B0 ≦ B3   ├──────────────────┐           │
              │     ?      │                  │           │
              └─────┬──────┘                  │           │
                    │ YES                     │           │
                    │              S4         │           │
              ┌─────┴──────┐        NO        │           │
              │  B0 ≦ B4   ├────────┐         │           │
              │     ?      │        │         │           │
              └─────┬──────┘        │         │           │
                    │ YES           │         │           │
                    │             S7│       S6│         S5│
                    │      ┌────────┴┐  ┌─────┴──┐  ┌─────┴──┐
                    │      │  N = 3  │  │  N = 2 │  │  N = 1 │
                    │      └────┬────┘  └────┬───┘  └────┬───┘
   S9               S10         │           │           │ S8
┌────────┐      ┌──────────┐    └───────────┼───────────┴──┐
│ Q0 = Q1│      │ Q0 = QMAX│                │              │
└───┬────┘      └────┬─────┘          ┌─────┴──────────────┴─┐
    │                │                │    CALCULATE Q0      │
    │                │                └──────────┬───────────┘
    │                │                           │
    ▼                ▼                           ▼
   ┌──────────────────────────────────────────────┐
   │                    END                        │
   └──────────────────────────────────────────────┘
```

## FIG. 16

EP 0 763 925 B1

## FIG. 17

308
MEMORY

302
8×8 BLOCK
FORMATION

304
DCT

310
LINEAR
QUANTIZATION

312
VLC

316

314
QUANTIZATION
STEP COEFFICIENT
GENERATION

## FIG. 18

CODE
QUANTITY

QUANTIZATION
STEP SIZE

## *FIG. 19*

CODE QUANTITY

SET CODE
QUANTITY

● : MEASURED
POINTS

FORECAST
*STEP SIZE*

QUANTIZATION
STEP SIZE

$k_1$    $\ell$    $k_2$    $\ell$    $k_3$

## *FIG. 20*

CODE QUANTITY (n)

nb1

n

nb2

n

nb3

n

nb4

nbn

$kf^x$ $kf^{2x}$   $kf^{3x}$    $kf^{4x}$ ----------- $kf^{nx}$

QUANTIZATION STEP (k)

## FIG. 21

## FIG. 22